# EUROPEAN PATENT SPECIFICATION

(11) **EP 4 386 665 B1**
(45) Date of publication and mention of the grant of the patent: **02.07.2025**
(21) Application number: 23214590.4
(22) Date of filing: 06.12.2023
(51) Int. Cl.: G06T 7/00, G06T 7/162, G06V 40/14, G06T 7/11, G06V 10/82

(54) **IMAGE PROCESSING APPARATUS, METHOD, AND PROGRAM**
BILDVERARBEITUNGSVORRICHTUNG, -VERFAHREN UND -PROGRAMM
APPAREIL, PROCÉDÉ ET PROGRAMME DE TRAITEMENT D'IMAGE

(30) Priority: 15.12.2022 JP 2022199948
(43) Date of publication of application: 19.06.2024
(73) Proprietor: FUJIFILM Corporation, Tokyo Tokyo 106-8620 (JP)
(72) Inventor: SASUGA, Saeko, Tokyo, 106-8620 (JP); KITAMURA, Yoshiro, Tokyo, 106-8620 (JP)
(74) Representative: Dehns Germany Partnerschaft mbB

(56) References cited:
- US-A1- 2012 053 443
- US-A1- 2013 202 170
- US-A1- 2022 270 762

## Description

### BACKGROUND

### Technical Field

The present disclosure relates to an image processing apparatus, method, and program.

### Related Art

A graph cut method is used to separate an image into a plurality of regions. For example, JP2014-071716A proposes a method for separating arteries and veins included in a medical image using a higher-order graph cut method for selecting N (> 3) pixels such that the N pixels represent a predetermined figure on an image and for minimizing an N-th order energy with pixel values of the N pixels as variables. In the method disclosed in JP2014-071716A, in a case of separating blood vessels, a straight line is used as a predetermined figure to separate arteries and veins in an image such that all pixel groups including pixels that are linearly aligned with a certain length belong to the same class.

In the method disclosed in JP2014-071716A, a straight line is used as a predetermined figure for separating arteries and veins. However, blood vessels not only run linearly, but also run in a curved shape in many parts of the pelvis, for example. Therefore, the method disclosed in JP2014-071716A cannot accurately separate arteries and veins. US 2022/270762 teaches an image processing method using a segmentation algorithm to label pixels. Algorithms for deriving running vectors are also disclosed in US 2012/053443 A1. Segmenting images in image processing is also taught in US 2013/202170 A1.

### SUMMARY OF THE INVENTION

The present invention has been made in view of the above circumstances, and an object of the present invention is to enable accurate separation of a plurality of tubular structures included in a medical image, such as an artery and a vein.

According to an aspect of the present invention, there is provided an image processing apparatus as defined by claim 1.

"Each pixel" may be all pixels of the tubular structure or pixels obtained by thinning out the pixels. Pixels may be thinned out at equal intervals, and thinning-out intervals may be changed in the tubular structure. For example, the thinning-out interval may be smaller at a position closer to the center of the tubular structure compared with a value away from the center of the tubular structure.

A "running vector" is a vector representing a direction in which the tubular structure is present. In the present disclosure, vectors pointing in the same direction are treated as running vectors in the same direction. In addition, two vectors pointing in opposite directions by 180 degrees, that is, two vectors having the same value in a case where the cosine of an angle with respect to the reference direction is calculated, both point in the direction in which a tubular structure is present. Therefore, in the present disclosure, such running vectors pointing in opposite directions by 180 degrees are also treated as running vectors in the same direction.

In the image processing apparatus according to the aspect of the present invention, the processor may be configured to derive the running vector using a trained model for deriving the running vector at each pixel of the plurality of tubular structures from the medical image.

[deleted]

[deleted]

In the image processing apparatus according to the aspect of the present invention, the processor may be configured to, in separating the plurality of tubular structures using a graph cut process by selecting a pixel group including N (> 3) pixels for which the running vectors are in the same direction or continuously change and which are adjacent to each other and minimizing an N-th order energy with labels of the pixels included in the pixel group as variables, the variables being represented by 0 or 1, set the N-th order energy to be lower in a case where all of variables corresponding to the pixels included in the pixel group are 0 or all of the variables corresponding to the pixels included in the pixel group are 1 than in a case where all of the variables are not 0 and all of the variables are not 1.

In the image processing apparatus according to the aspect of the present invention, the processor may be configured to, in separating the plurality of tubular structures using a graph cut process by selecting a pixel group including N (> 3) pixels having a shortest weighted path based on the likelihood that the same label is assigned and minimizing an N-th order energy with labels of the pixels included in the pixel group as variables, the variables being represented by 0 or 1, set the N-th order energy to be lower in a case where all of variables corresponding to the pixels included in the pixel group are 0 or all of the variables corresponding to the pixels included in the pixel group are 1 than in a case where all of the variables are not 0 and all of the variables are not 1.

In the image processing apparatus according to the aspect of the present invention, the processor may be configured to: derive a running vector at a plurality of center pixels along a center of the plurality of tubular structures; derive a shortest path tree from an origin of a class representing each of the plurality of tubular structures such that an angle formed by an edge connecting the plurality of center pixels and the running vector is minimized; and separate the plurality of tubular structures by cutting the shortest path tree such that the plurality of center pixels are in the same class as an origin having a closer path and a higher likelihood that the same label is assigned.

In the image processing apparatus according to the aspect of the present invention, the processor may be configured to separate pixels other than pixels along the running vectors into tubular structures different from each other.

In the image processing apparatus according to the aspect of the present invention, the processor may be configured to separate the plurality of tubular structures such that a boundary of the plurality of tubular structures is derived between pixels other than pixels where the running vectors intersect each other.

In the image processing apparatus according to the aspect of the present invention, the processor may be configured to separate the plurality of tubular structures using a trained model in which machine learning is performed so as to minimize a loss in a direction in which the running vectors are continuous, based on the medical image and the running vectors.

In the image processing apparatus according to the aspect of the present invention, the plurality of tubular structures may include at least two of an artery, a vein, a portal vein, a ureter, or a nerve.

According to another aspect of the present invention, there is provided an image processing method as defined by claim 10.

According to another aspect of the present invention, there is provided an image processing program as defined by claim 11.

According to the aspects of the present invention, it is possible to accurately separate a plurality of tubular structures included in a medical image.

### BRIEF DESCRIPTION OF THE DRAWINGS

Fig. 1 is a diagram showing a schematic configuration of a diagnosis support system to which an image processing apparatus according to a first embodiment of the present disclosure is applied.
Fig. 2 is a diagram showing a hardware configuration of the image processing apparatus according to the first embodiment.
Fig. 3 is a functional configuration diagram of the image processing apparatus according to the first embodiment.
Fig. 4 is a diagram showing running vectors.
Fig. 5 is a diagram showing supervised training data used to construct a trained model for deriving a running vector.
Fig. 6 is a diagram for describing a likelihood that the same label is assigned to two adjacent pixels.
Fig. 7 is a diagram for describing selection of pixel groups.
Fig. 8 is a diagram for describing a graph cut.
Fig. 9 is a diagram showing a graph in a blood vessel region.
Fig. 10 is a diagram for describing separation of graphs in a blood vessel region.
Fig. 11 is a diagram showing a display screen of a separation result.
Fig. 12 is a flowchart showing a process performed in the first embodiment.
Fig. 13 is a diagram for describing selection of pixel groups in a second embodiment.
Fig. 14 is a diagram for describing selection of pixel groups in the second embodiment.
Figs. 15A to 15E are diagrams for describing separation of an artery and a vein in a third embodiment.
Fig. 16 is a schematic diagram showing a process performed by a trained model used by a separation unit in a fourth embodiment.
Fig. 17 is a diagram showing supervised training data used in machine learning of the trained model in the fourth embodiment.
Fig. 18 is a diagram for describing derivation of a second loss in the fourth embodiment.

### DETAILED DESCRIPTION

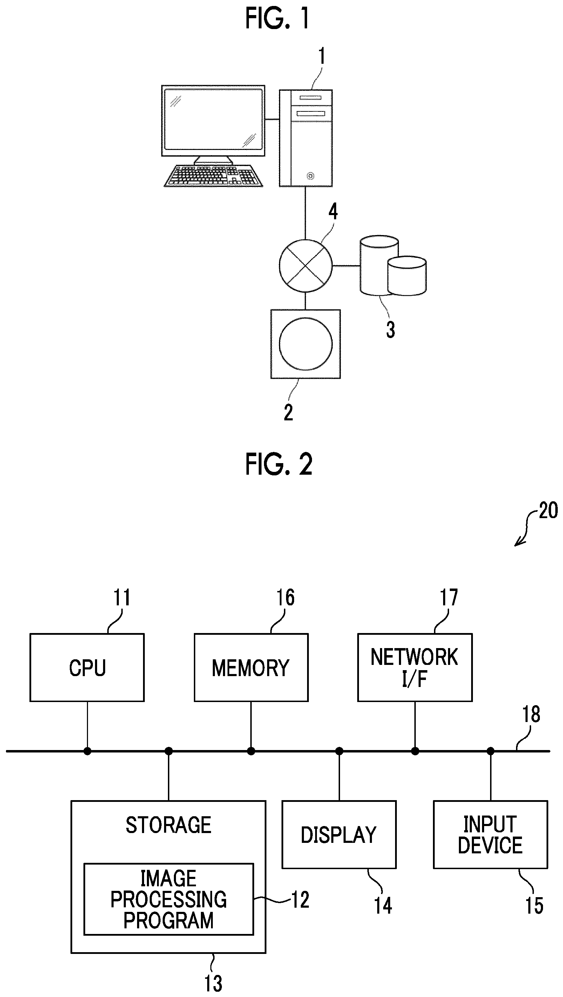

Embodiments of the present invention will be described below with reference to the drawings. First, a configuration of a medical information system to which an image processing apparatus according to a first embodiment is applied will be described. Fig. 1 is a diagram showing a schematic configuration of the medical information system. In the medical information system shown in Fig. 1, a computer 1 encompassing an image processing apparatus according to the first embodiment, an imaging apparatus 2, and an image storage server 3 are connected via a network 4 in a communicable state.

The computer 1 encompasses an image processing apparatus according to the present embodiment, and an image processing program according to the present embodiment is installed in the computer 1. The computer 1 may be a workstation or a personal computer directly operated by a doctor performing the diagnosis, or may be a server computer connected to a workstation and a personal computer via a network. The image processing program is stored in a storage apparatus of a server computer connected to the network or in a network storage in a state in which it can be accessed from the outside, and is downloaded to and installed on the computer 1 used by a doctor in response to a request. Alternatively, the image processing program is recorded on a recording medium, such as a digital versatile disc (DVD) or a compact disc read only memory (CD-ROM), and distributed, and is installed on the computer 1 from the recording medium.

The imaging apparatus 2 is an apparatus that generates a three-dimensional image representing diagnosis target parts of a subject by imaging the part, and is, specifically, the imaging apparatus 2 is a CT apparatus, an MRI apparatus, a positron emission tomography (PET) apparatus, and the like. A three-dimensional image consisting of a plurality of tomographic images generated by the imaging apparatus 2 is transmitted to and saved in the image storage server 3. In the present embodiment, the imaging apparatus 2 is a CT apparatus, and a CT image of a subject is generated as a three-dimensional image.

The image storage server 3 is a computer that saves and manages various types of data, and includes a large-capacity external storage apparatus and database management software. The image storage server 3 communicates with another apparatus via the wired or wireless network 4, and transmits/receives image data or the like. Specifically, various types of data including image data of a CT image generated by the imaging apparatus 2 are acquired via a network and saved in a recording medium such as a large-capacity external storage apparatus and managed. The storage format of the image data and the communication between the respective apparatuses via the network 4 are based on a protocol such as digital imaging and communication in medicine (DICOM).

Next, the image processing apparatus according to the first embodiment will be described. Fig. 2 is a diagram showing a hardware configuration of the image processing apparatus according to the first embodiment. As shown in Fig. 2, an image processing apparatus 20 includes a central processing unit (CPU) 11, a non-volatile storage 13, and a memory 16 as a temporary storage area. Further, the image processing apparatus 20 includes a display 14 such as a liquid crystal display, an input device 15 such as a keyboard and a mouse, and a network interface (I/F) 17 connected to the network 4. The CPU 11, the storage 13, the display 14, the input device 15, the memory 16, and the network I/F 17 are connected to a bus 18. The CPU 11 is an example of a processor in the present disclosure.

The storage 13 is realized by a hard disk drive (HDD), a solid state drive (SSD), a flash memory, and the like. An image processing program 12 is stored in the storage 13 as the storage medium. The CPU 11 reads out the image processing program 12 from the storage 13, loads the read program into the memory 16, and executes the loaded image processing program 12.

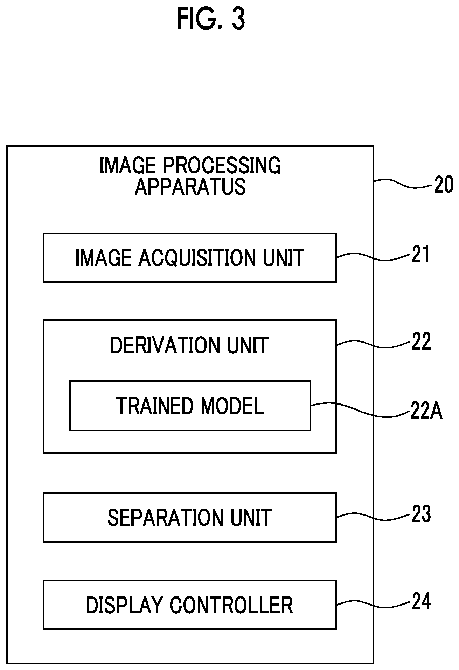

Next, a functional configuration of the image processing apparatus according to the first embodiment will be described. Fig. 3 is a diagram showing a functional configuration of the image processing apparatus according to the first embodiment. As shown in Fig. 3, the image processing apparatus 20 comprises an image acquisition unit 21, a derivation unit 22, a separation unit 23, and a display controller 24. By executing the image processing program 12 by the CPU 11, the CPU 11 functions as the image acquisition unit 21, the derivation unit 22, the separation unit 23, and the display controller 24.

The image acquisition unit 21 acquires a medical image G0 to be processed from the image storage server 3 in response to an instruction from the input device 15 provided by an operator. In the present embodiment, the medical image G0 is a three-dimensional CT image consisting of a plurality of tomographic images including arteries and veins, but the present disclosure is not limited thereto. An MRI image or a two-dimensional radiation image may be used as the medical image G0.

The derivation unit 22 derives a running vector representing a running direction of the tubular structure included in the medical image G0 at each pixel of the tubular structure. In the present embodiment, the tubular structure is an artery and a vein. Therefore, the derivation unit 22 derives a running vector at each pixel in the blood vessel included in the medical image G0.

Here, the running vector represents a direction in which a blood vessel is present, and in the present embodiment, vectors pointing in the same direction are treated as running vectors in the same direction. In addition, two vectors pointing in opposite directions by 180 degrees, that is, two vectors having the same value in a case where the cosine of an angle with respect to the reference direction is calculated, both point in the direction in which a tubular structure is present. Therefore, in the present embodiment, running vectors pointing in opposite directions by 180 degrees are also treated as running vectors in the same direction. Further, in the present embodiment, the running vector is assumed to be a unit vector having a size of 1. In the present embodiment, running vectors pointing in opposite directions by 180 degrees are treated as running vectors in the same direction. Therefore, the running vector and the direction of blood flow do not necessarily match. For example, in a case where an artery and a vein are parallel, the direction of blood flow is opposite between the artery and the vein, but in the present embodiment, the running vectors are in the same direction.

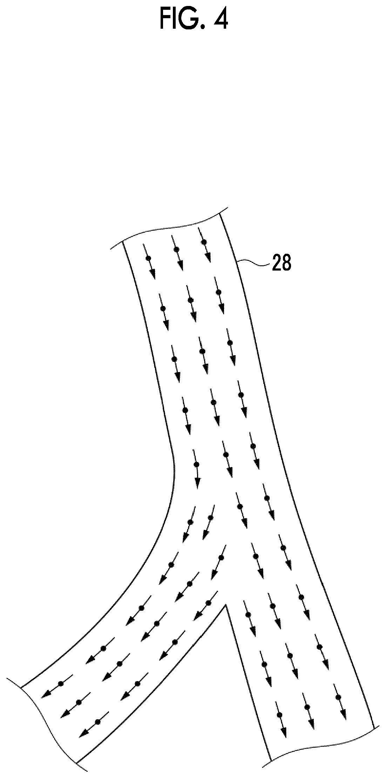

Fig. 4 is a diagram showing running vectors. In Fig. 4, pixels in a blood vessel region 28 are indicated by black dots. Further, although pixels are thinned out in Fig. 4, in practice, running vectors are derived at all the pixels in the blood vessel region 28.

In the present embodiment, the derivation unit 22 derives the running vector using a trained model 22A that derives the running vector at each pixel of the blood vessel from the medical image G0. In this case, the derivation unit 22 derives the running vectors for all the pixels of the medical image G0. Then, a blood vessel region is extracted from the medical image G0, and the running vector in the blood vessel region is specified.

In a case of extracting the blood vessel region, the derivation unit 22 extracts the blood vessel region from the medical image G0 without distinguishing between arteries and veins using a known method such as a Hessian filter, for example. As a method of extracting a blood vessel region from volume data, various methods have been proposed, including a method disclosed in "A. F. Frangi et al. Multiscale vessel enhancement filtering, Proceedings of MICCAI, 130-137, 1998."

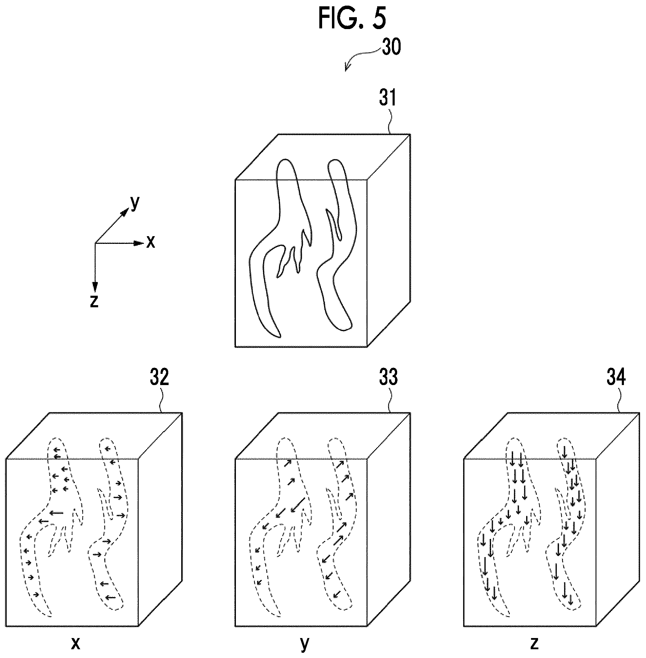

The trained model 22A is, for example, a convolutional neural network (CNN), and is constructed by machine-learning the CNN using supervised training data. Fig. 5 is a diagram showing supervised training data used to construct a trained model for deriving a running vector. As shown in Fig. 5, supervised training data 30 consists of a medical image for training 31 including a blood vessel and correct answer data 32 to 34 representing a running vector at each pixel position in a blood vessel region included in the medical image for training 31. Since the image input to the trained model 22A in the present embodiment is a three-dimensional CT image, the medical image for training 31 is a three-dimensional CT image. In addition, the correct answer data 32 to 34 represent running vectors of each pixel (voxel) in an x direction, a y direction, and a z direction in the medical image for training 31.

The correct answer data 32 to 34 may be derived from the medical image for training 31 using a method of analyzing the fluid inside the blood vessel by deep learning, as described in "Prediction of 3D Cardiovascular hemodynamics before and after coronary artery bypass surgery via deep learning, Gaoyang Li et al., COMMUNICATIONS BIOLOGY, 22 January 2021", for example. In addition, the correct answer data 32 to 34 may be derived by creating a graph structure passing through the center line for each of the artery and the vein, calculating a direction vector from the connection information of the nodes, and assigning the direction vector to the adjacent voxels as a correct vector.

In addition, the derivation unit 22 may first extract a blood vessel region from the medical image G0 and derive the running vector only in the extracted blood vessel region. In this case, the medical image for training 31, a mask of the blood vessel region in the medical image for training 31, and correct answer data in the blood vessel region are used as supervised training data for training the trained model 22A. Then, the medical image G0 and the mask of the blood vessel region extracted from the medical image G0 are input to the trained model 22A, and the running vector in the blood vessel region is output.

Further, the derivation unit 22 may derive the running vector for all the pixels of the medical image G0 or all the pixels in the blood vessel region, but may derive the running vector by thinning out every few pixels. Further, the thinning-out interval of the pixels may be equal intervals, but in particular, in a case where the blood vessel region is extracted first, the thinning-out interval may be smaller at a position closer to the center of the blood vessel region, and the thinning-out interval may be larger at a position away from the center.

The separation unit 23 separates arteries and veins using the running vectors derived by the derivation unit 22. In the first embodiment, the arteries and the veins are separated along running vectors. Specifically, a plurality of tubular structures are separated by determining a likelihood that the same label is assigned to two adjacent pixels.

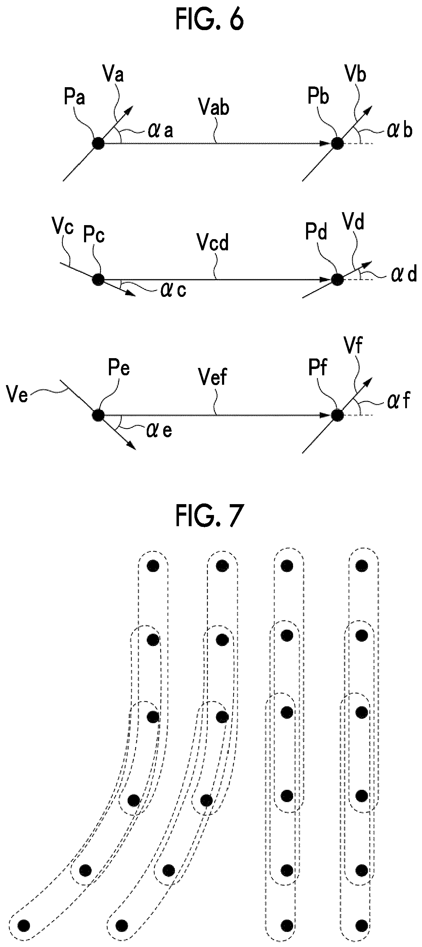

Fig. 6 is a diagram for describing a likelihood that the same label is assigned to two adjacent pixels. A combination of a pixel Pa and a pixel Pb, a combination of a pixel Pc and a pixel Pd, and a combination of a pixel Pe and a pixel Pf are considered as shown in Fig. 6. First, for each combination of pixels, a direction vector Vab from the pixel Pa to the pixel Pb, a direction vector Vcd from the pixel Pc to the pixel Pd, and a direction vector Vef from the pixel Pe to the pixel Pf are set. Further, from the pixels Pa to Pf, running vectors Va to Vf are derived, respectively. Here, in a case where it is considered that angles αa and αb between the direction vector Vab and the running vectors Va and Vb, angles αc and αd between the direction vector Vcd and the running vectors Vc and Vd, and angles αe and αf between the direction vector Vef and the running vectors Ve and Vf, the smaller the angle between the direction vector and at least one of the two running vectors, particularly each of the two running vectors, the higher the likelihood that the same label is assigned to two pixels.

For example, in a case where a combination of the pixels Pa and Pb, a combination of the pixels Pc and Pd, and a combination of the pixels Pe and Pf are seen, the combination of pixels with the highest likelihood that the same label is assigned is the combination of the pixels Pc and Pd.

In the first embodiment, the separation unit 23 determines a likelihood that the same label is assigned to a combination of two pixels, and separates each pixel into an artery and a vein. For example, in a case where it is considered that each pixel is separated into an artery and a vein using a graph cut process, as the angle between the direction vector connecting the two pixels and the running vector at at least one of the two pixels is smaller, by reducing the energy of an edge connecting two pixels, the edge is not cut between the two pixels. A specific method thereof will be described below.

In the first embodiment, the separation unit 23 separates the artery and the vein using a graph cut process by selecting a pixel group including N (> 3) pixels for which the running vectors are in the same direction or continuously change and which are adjacent in the direction of the running vectors, and minimizing an N-th order energy with labels of the pixels included in the pixel group as variables.

The fact that the running vectors are continuous means that a change in the running vectors at the adjacent pixels is small such that the pixels can be smoothly connected along the direction of the running vectors, that is, there is a high likelihood that the same label is assigned to adjacent pixels as described above. The determination as to whether or not the change in the running vectors is small may be made by determining whether or not an angle between the running vectors for the two pixels and the direction vector connecting the two pixels is less than a predetermined threshold value and the change in direction of the two running vectors is less than a predetermined angle (for example, 45 degrees).

First, the selection of pixel groups will be described. Fig. 7 is a diagram for describing the selection of pixel groups. In Fig. 7, pixels in a blood vessel region are indicated by black dots. Further, although pixels are thinned out in Fig. 7, in practice, running vectors are derived from all the pixels in the blood vessel region. In the present embodiment, the separation unit 23 sets a pixel group including four pixels for which the running vectors are in the same direction or continuously change and which are adjacent in the direction of the running vectors. In Fig. 7, the pixel group is indicated by surrounding four pixels with a broken line.

The separation unit 23 minimizes the N-th order energy with the labels of the pixels included in the set pixel group as variables to separate the artery and the vein. In the first embodiment, the artery and the vein are separated using, for example, a higher-order graph cut method disclosed in JP2014-071716A.

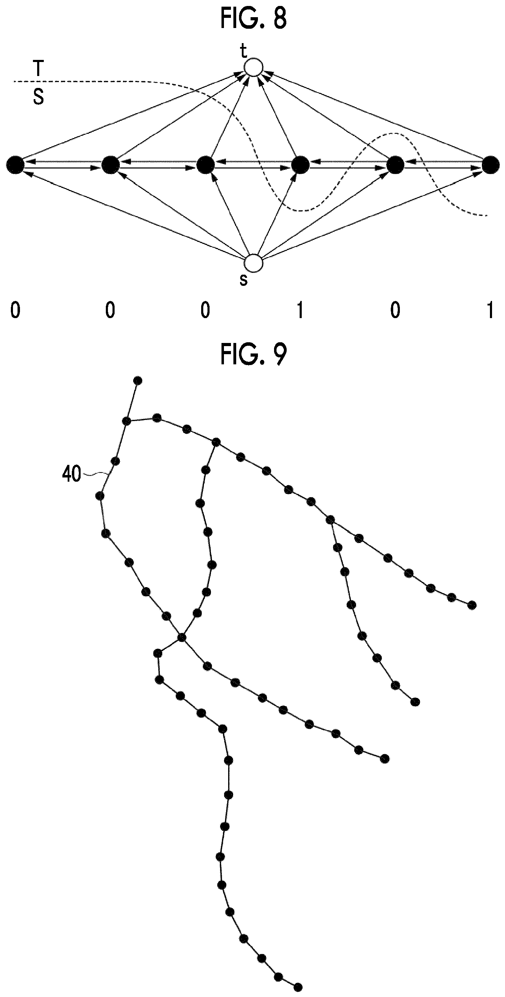

First, the graph cut method will be described. Fig. 8 is a diagram for describing a graph cut method. First, each pixel is used as a vertex, and two vertices s and t representing two labels to be separated from variables {x1, x2, ..., xn}, x ∈ {1,0}, which correspond to each pixel of an image, are defined.

In a case where variables corresponding to each pixel of the image are defined as {x1, x2, ..., xn}, x ∈ {1, 0}, in the graph cut method, as shown in Fig. 8, each pixel has a vertex xi (or a vertex xj) corresponding to each pixel and two vertices s and t, and each of the vertex xi and the vertex xj is composed of an edge from the vertex s to the vertex xi, an edge from the vertex xi to the vertex t, and an edge between the vertices xi and xj corresponding to adjacent pixels. Then, a primary energy is defined for the edge from the vertex s to the vertex xi and the edge from the vertex xi to the vertex t, and a secondary energy is defined for an edge connecting the vertices corresponding to the adjacent pixels. Note that the energy is defined based on variables corresponding to each pixel. The graph cut is a method of defining such an energy and separating the vertices shown in Fig. 8 into a class of S and a class of T such that the energy is minimized. Fig. 8 shows that the fourth and sixth vertices from the left are separated into the class (variable is 1) of T, and the first to third and fifth vertices from the left are separated into the class of S (variable is 0). Further, in the higher-order graph cut used in the present embodiment, the N-th order energy is defined for the N (N > 3) pixel groups selected based on the running vector as described above, and the classes are separated such that the energy is minimized.

The primary energy is a value that depends only on the label assigned to the pixel, and has a direct influence determined depending on which label is assigned to each pixel. The secondary energy is defined as energy to reflect prior knowledge as to how the labels assigned to adjacent pixels should be related to each other. In a case where all of variables corresponding to the N pixels included in the pixel group are 0 or all of the variables corresponding to the pixels included in the pixel group are 1, the N-th order energy is defined as energy to be smaller than in a case where all of the variables are not 0 and all of the variables are not 1.

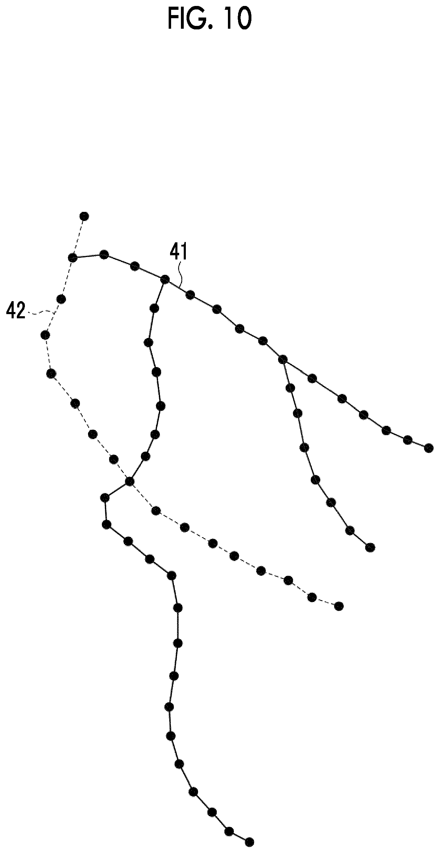

The separation unit 23 minimizes the N-th order energy and further defines the energy of each edge such that the label at which the sum of the primary energy, the secondary energy, and the N-th order energy is minimized corresponds to the minimum cut. In a case where the energy is set in this way and the graph cut process is performed, the pixels in the artery and the pixels in the vein can be separated such that the blood vessels having the N pixels extending along the running vectors at all the positions are in the same class. For example, a graph 40 in the blood vessel region included in the medical image G0 shown in Fig. 9 can be separated into a graph 41 of an artery shown by a solid line and a graph 42 of a vein shown by a broken line, as shown in Fig. 10.

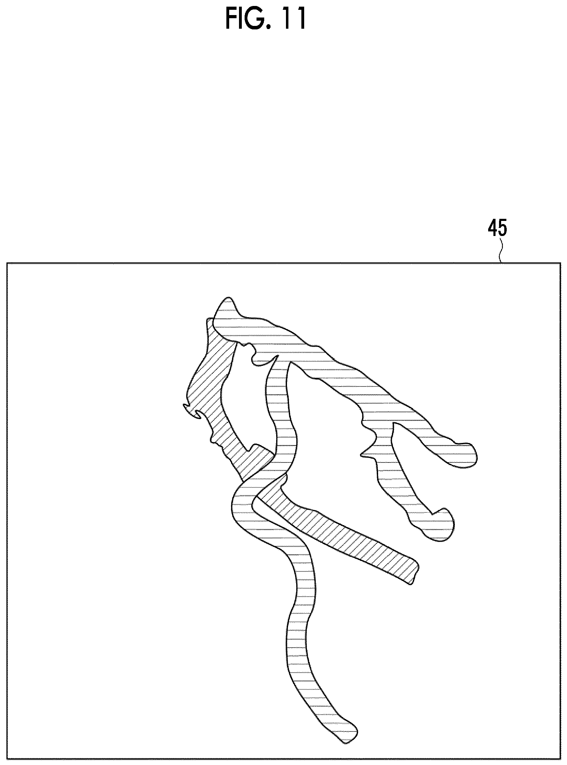

The display controller 24 displays the arteries and veins separated by the separation unit 23 on the display 14 in an identifiable manner. Fig. 11 is a diagram showing a display screen of a separation result. Since the medical image G0 is a three-dimensional image, a three-dimensional projected image is displayed on the display 14 by a predetermined method such as volume rendering. In this case, the display controller 24 displays arteries and veins in different colors. In addition, in a display screen 45 shown in Fig. 11, the difference in colors is shown by applying different hatching.

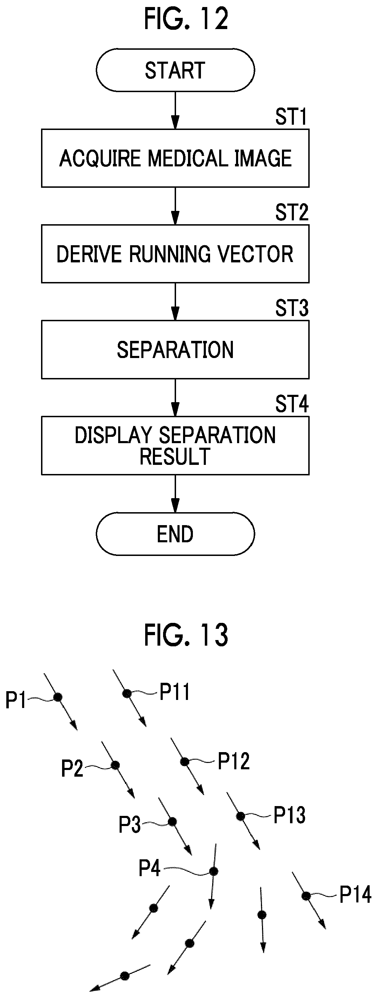

Next, a process performed in the first embodiment will be described. Fig. 12 is a flowchart showing the process performed in the first embodiment. First, the image acquisition unit 21 acquires the medical image G0 from the image storage server 3 (Step ST1), and the derivation unit 22 derives a running vector representing a running direction of an artery and a vein at each pixel position of the artery and the vein based on the medical image G0 (Step ST2). Then, the separation unit 23 separates the artery and the vein using the running vector (Step ST3), the display controller 24 displays the separation result (Step ST4), and the process ends.

In this way, in the first embodiment, a plurality of tubular structures, such as an artery and a vein, are separated using the running vectors representing the running directions of the plurality of tubular structures. Therefore, even in a case where the tubular structure is bent, the plurality of tubular structures can be separated along the running direction thereof. Therefore, it is possible to accurately separate a plurality of tubular structures included in the medical image G0.

Next, a second embodiment of the present disclosure will be described. Since a functional configuration of an image processing apparatus according to the second embodiment is the same as the functional configuration of the image processing apparatus according to the first embodiment, a detailed description of the functional configuration will be omitted here. The image processing apparatus according to the second embodiment is different from that of the first embodiment in that the separation unit 23 selects a pixel group including N (> 3) pixels having the shortest weighted path based on a likelihood that the same label is assigned. Specifically, the separation unit 23 selects a pixel group including N (> 3) pixels having the smallest sum of weighted paths obtained by multiplying a weight based on a likelihood that the same label is assigned by a length of a path connecting each pixel and then adding the weight.

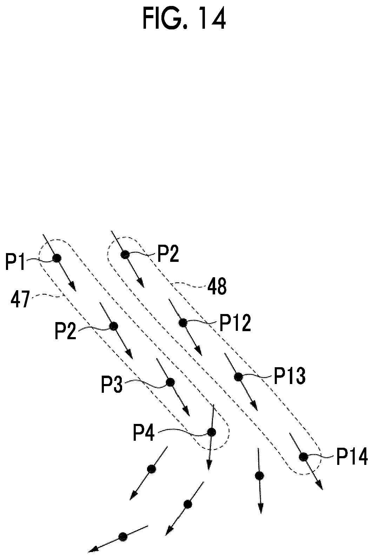

Figs. 13 and 14 are diagrams for describing selection of pixel groups in the second embodiment. First, in selecting the pixel groups, the separation unit 23 first derives in advance a likelihood that the same label as adjacent pixels is assigned to each pixel in the blood vessel region. Examples of the adjacent pixels are pixels in the vicinity of 9 or pixels in the vicinity of 27, but the adjacent pixels are not limited thereto. In the second embodiment, as a likelihood, it is sufficient that a smaller value is used in a case where the angle between the direction vector connecting the pixels and the running vector at each pixel is closer to 0 degrees or closer to 180 degrees that in a case where the angle is closer to 90 degrees.

Here, in a case where a pixel P1 shown in Fig. 13 is set as a starting point, the separation unit 23 determines a likelihood that the same label as adjacent pixels is assigned in a predetermined range centered on the pixel P1. Then, a pixel having the highest likelihood and having the shortest path connected to the pixel P1 is specified. Specifically, a pixel having the smallest sum of weighted paths obtained by multiplying the likelihood by the length of the path from the pixel P1 is specified. In the running vector shown in Fig. 13, it is assumed that a pixel P2 is specified with respect to the pixel P1. Next, the separation unit 23 determines a likelihood that the same label as adjacent pixels is assigned in a predetermined range centered on the pixel P2. Then, a pixel having the highest likelihood and having the shortest path connected to the pixel P2 is specified in the same manner as described above. In the running vector shown in Fig. 13, it is assumed that a pixel P3 is specified with respect to the pixel P2.

Hereinafter, the separation unit 23 repeats the same process to select a pixel group including N (for example, four) pixels having the shortest path to the pixel P1. In a case where a pixel P1 shown in Fig. 13 is set as the starting point, the selected pixel group is a pixel group 47 including pixels P1 to P4 as shown in Fig. 14. On the other hand, in a case where a pixel P11 shown in Fig. 13 is set as the starting point, the selected pixel group is a pixel group 48 including pixels P11 to P14 as shown in Fig. 14.

The graph cut process after the pixel group is selected may be performed in the same manner as in the first embodiment. Accordingly, in the second embodiment, as in the first embodiment, even in a case where the tubular structure is bent, the plurality of tubular structures can be separated along the running direction thereof. Therefore, it is possible to accurately separate a plurality of tubular structures included in the medical image G0.

Next, a third embodiment of the present disclosure will be described. Since a functional configuration of an image processing apparatus according to the third embodiment is the same as the functional configuration of the image processing apparatus according to the first embodiment, a detailed description of the functional configuration will be omitted here. The image processing apparatus according to the third embodiment is different from that of the first embodiment in that the derivation unit 22 derives a running vector at a plurality of pixels (referred to as center pixels) along the center of the blood vessel region extracted from the medical image G0, and the separation unit 23 derives a shortest path tree from an origin of a class representing each of the artery and the vein such that an angle formed by an edge connecting the plurality of center pixels and the running vector is minimized, and separates the artery and the vein such that the plurality of center pixels are in the same class as an origin having a closer path and a higher likelihood that the same label is assigned.

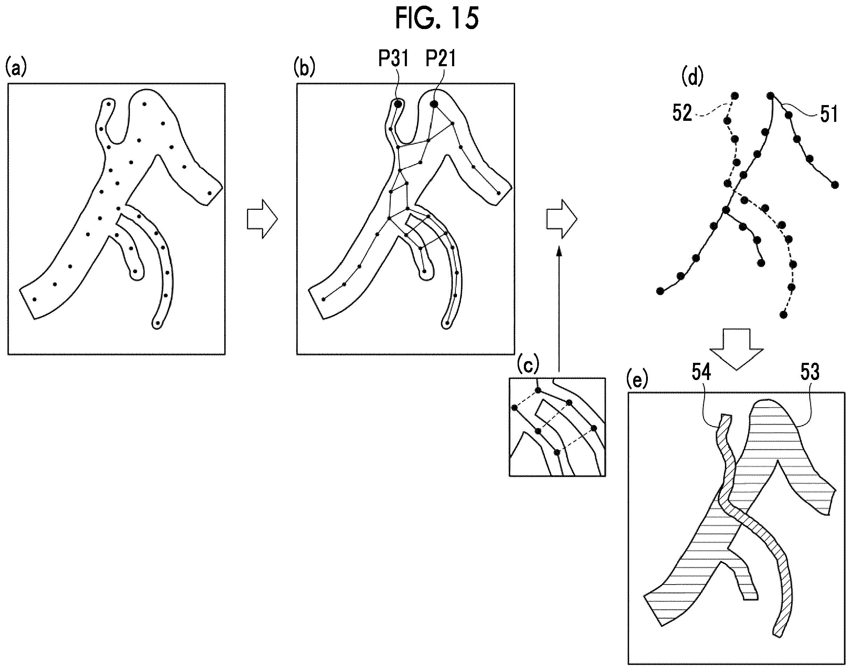

Figs. 15A to 15E are diagrams for describing separation of arteries and veins in the third embodiment. First, the derivation unit 22 sets a plurality of center pixels at intervals along the center line of the blood vessel region as shown in Fig. 15A in the blood vessel region extracted from the medical image G0, and derives a running vector for each of the plurality of center pixels.

In the third embodiment, as shown in Fig. 15B, the separation unit 23 sets a pixel P21 as the origin of the artery and a pixel P31 as the origin of the vein, and derives a shortest path tree from the pixel P21 and the pixel P31. In this case, in a case where there are a plurality of center pixels that are close to one center pixel, a plurality of edges are set for the one center pixel in the shortest path tree.

Then, the separation unit 23 derives the artery and the vein by cutting the shortest path tree such that the plurality of center pixels are in the same class as an origin having a closer path and a higher likelihood that the same label is assigned. In this case, the energy of an edge connecting a center pixel for which a plurality of edges are set and a center pixel having the highest likelihood that the same label as the label assigned to the center pixel is assigned is reduced, and the energy of the other edges is set to be large. Accordingly, as shown in Fig. 15C, the edges in the direction along the running vector as indicated by a solid line are not cut, and the edges in the direction intersecting the running vector as indicated by a broken line are cut. Therefore, as shown in Fig. 15D, the shortest path tree can be separated into a graph 51 of an artery indicated by a solid line and a graph 52 of a vein indicated by a broken line. Then, the separation unit 23 extracts an artery region 53 and a vein region 54 in the medical image G0 by expanding a region of each of the graphs 51 and 52, as shown in Fig. 15E.

Next, a fourth embodiment of the present disclosure will be described. Since a functional configuration of an image processing apparatus according to the fourth embodiment is the same as the functional configuration of the image processing apparatus according to the first embodiment, a detailed description of the functional configuration will be omitted here. The image processing apparatus according to the fourth embodiment is different from that of the first embodiment in that the separation unit 23 separates pixels other than pixels along the running vector into tubular structures different from each other. In other words, in the fourth embodiment, the pixels not along the running vector are not separated into the same tubular structure.

For this reason, the image processing apparatus according to the fourth embodiment separates each voxel of the medical image G0 into an artery and a vein using the trained model such that a boundary of the artery and the vein is derived between pixels other than pixels where the running vectors intersect each other, that is, between pixels where the running vectors do not intersect each other.

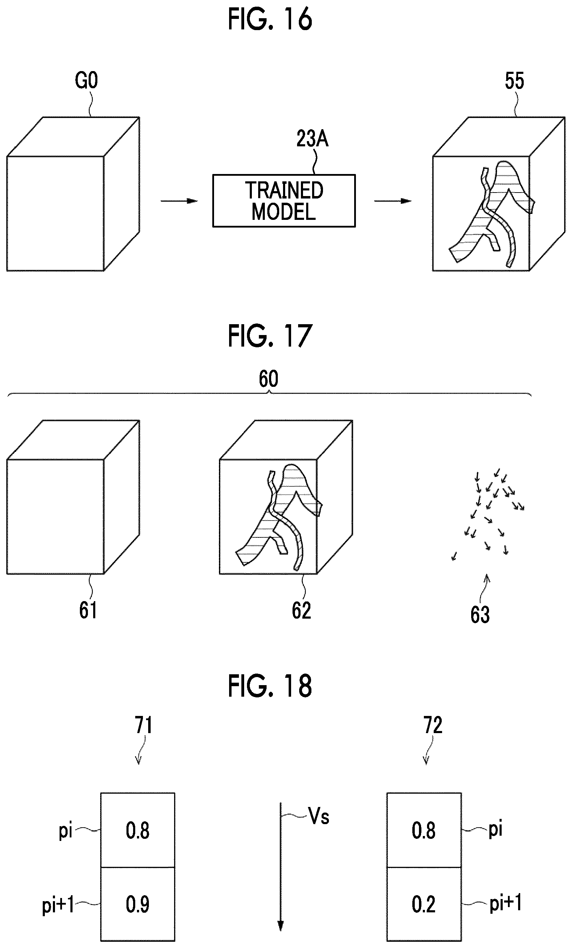

Fig. 16 is a schematic diagram showing a process performed by a trained model used by a separation unit in the fourth embodiment. As shown in Fig. 16, a trained model 23A is constructed by machine-learning a neural network such that, in a case where the medical image G0 is input, a probability that each pixel of the medical image G0 is an artery or a vein is output and a separation result 55 of the artery and the artery is output. The trained model 23A may output a probability that each pixel is an artery or a vein in a case where the blood vessel region in the medical image G0 is input.

Fig. 17 is a diagram showing supervised training data used in machine learning of the trained model in the fourth embodiment. As shown in Fig. 17, supervised training data 60 includes a medical image for training 61, correct answer data 62 in which arteries and veins included in the medical image for training 61 are extracted, and a running vector 63 in a blood vessel region included in the medical image for training 61.

In a case of learning, the medical image for training 61 is input to the neural network. The neural network outputs the probability that each pixel of the medical image for training 61 is an artery and the probability that each pixel of the medical image for training 61 is a vein. A blood vessel region may be extracted in advance from the medical image for training 61, and the probability that each pixel in the blood vessel region is an artery and the probability that each pixel in the blood vessel region is a vein may be output. Then, a difference between the output probability and the correct answer data 62 is derived as a first loss L1.

Further, for each pixel in the blood vessel region of the medical image for training 61, the sum of differences in probability between two pixels adjacent in the direction along the running vector is derived as a second loss L2. Fig. 18 is a diagram for describing the derivation of the second loss. In Fig. 18, numerical values in the pixels adjacent in a direction along a running vector Vs represent probabilities pi and pi+1 of being arteries. In other words, for the two pixels constituting a pixel pair 71 on the left side in Fig. 18, the probabilities pi and pi+1 of being arteries are 0.8 and 0.9, respectively, and for the two pixels constituting a pixel pair 72 on the right side in Fig. 18, the probabilities pi and pi+1 of being arteries are 0.8 and 0.2, respectively. A loss between pixel pairs is derived by |pi - pi+1|. Therefore, the second loss L2 is derived as Σ|pi - pi+1|.

Then, the neural network is subjected to machine learning using a large amount of supervised training data such that the sum of the first loss L1 and the second loss L2 is minimized, whereby the trained model 23A is constructed. In other words, a parameter such as a weight of the coupling between the respective layers constituting the neural network is adjusted such that the sum of the first loss L1 and the second loss L2 is reduced by a backpropagation method or the like. Machine learning is performed such that the sum of the first loss L1 and the second loss L2 is equal to or less than a predetermined threshold value. In addition, machine learning may be performed a predetermined number of times.

Here, by using the second loss L2, in a case where the difference between the probabilities pi and pi+1 at two pixels adjacent to the direction of the running vector Vs as in the pixel pair 71 shown in Fig. 18 is small, the neural network is trained such that the difference is maintained. On the other hand, in a case where the difference in the probabilities pi and pi+1 between two pixels adjacent in the direction of the running vector Vs as in the pixel pair 72 is large, the neural network is trained such that the difference is reduced.

In this manner, in a case where the medical image G0 is input, the trained model 23A outputs the probability that each pixel of the medical image G0 is artery and the probability that each pixel of the medical image G0 is a vein such that the boundary of the artery and the vein is derived between pixels other than pixels where the running vectors intersect each other, that is, the boundary of the artery and the vein does not intersect the running vector. Accordingly, in the medical image G0, the artery and the vein can be separated along the running vector.

In each of the embodiments described above, the artery and the vein are used as the plurality of tubular structures included in the medical image G0, but the present disclosure is not limited thereto. The technology of the present disclosure can also be applied to a case of separating a plurality of tubular structures such as a portal vein, a ureter, and a nerve, in addition to the artery and the vein.

Nerves do not contain a fluid flowing through the inside of the nerves, but run toward the extremities of the human body with the brain or the spinal cord as a starting point. Therefore, it is possible to derive a running vector for the nerve and separate the nerve from another tubular structure based on the running vector.

Further, in each of the above-described embodiments, for example, as hardware structures of processing units that execute various types of processing, such as the image acquisition unit 21, the derivation unit 22, the separation unit 23, and the display controller 24 of the image processing apparatus 20, various processors shown below can be used. As described above, the various processors include a programmable logic device (PLD) as a processor of which the circuit configuration can be changed after manufacture, such as a field programmable gate array (FPGA), a dedicated electrical circuit as a processor having a dedicated circuit configuration for executing specific processing such as an application specific integrated circuit (ASIC), and the like, in addition to the CPU as a general-purpose processor that functions as various processing units by executing software (programs).

One processing unit may be configured by one of the various processors, or may be configured by a combination of the same or different types of two or more processors (for example, a combination of a plurality of FPGAs or a combination of the CPU and the FPGA). In addition, a plurality of processing units may be configured by one processor.

As an example in which a plurality of processing units are configured by one processor, first, there is a form in which one processor is configured by a combination of one or more CPUs and software as typified by a computer, such as a client or a server, and this processor functions as a plurality of processing units. Second, there is a form in which a processor for realizing the function of the entire system including a plurality of processing units via one integrated circuit (IC) chip as typified by a system on chip (SoC) or the like is used. In this way, various processing units are configured by one or more of the above-described various processors as hardware structures.

Furthermore, as the hardware structure of the various processors, more specifically, an electrical circuit (circuitry) in which circuit elements such as semiconductor elements are combined can be used.

### Explanation of References

1: computer
2: imaging apparatus
3: image storage server
4: network
11: CPU
12: image processing program
13: storage
14: display
15: input device
16: memory
17: network I/F
18: bus
20: image processing apparatus
21: image acquisition unit
22: derivation unit
22A: trained model
23: separation unit
23A: trained model
24: display controller
28: blood vessel region
30, 60: supervised training data
31, 61: medical image for training
32 to 34, 62: correct answer data
40: graph
41, 51: graph of artery
42, 52: graph of vein
45: display screen
47, 48: pixel group
53: artery region
54: vein region
55: separation result
63: running vector
71, 72: pixel pair
G0: medical image
Pa to Pf, P1 to P4, P11 to P14. P21, P31: pixel
Va to Vf, Vs: running vector
Vab, Vcd, Vef: direction vector
αa to αf: angle

## Claims

1. An image processing apparatus comprising at least one processor (11),
wherein the processor is configured to:
derive, at each pixel of a plurality of tubular structures, running vectors being unit vectors representing directions running from the pixel in which a tubular structure is present based on a medical image including the plurality of tubular structures; and
separate the plurality of tubular structures along the running vectors;
**characterised in that**
the processor is configured to, based on an angle formed by a direction vector from a first pixel to a second pixel and the running vector at at least one of the first pixel or the second pixel, determine the likelihood that the same label is assigned to the first pixel and the second pixel to separate the plurality of tubular structures, wherein the smaller the angle the higher the likelihood that the same label is assigned to the first and second pixels.

2. The image processing apparatus according to claim 1,
wherein the processor is configured to derive the running vector using a trained model for deriving the running vector at each pixel of the plurality of tubular structures from the medical image.

3. The image processing apparatus according to claim 1 or 2,
wherein the processor is configured to, in separating the plurality of tubular structures using a graph cut process by selecting a pixel group including N (> 3) pixels for which the running vectors are in the same direction or continuously change and which are adjacent to each other and minimizing an N-th order energy with labels of the pixels included in the pixel group as variables, the variables being represented by 0 or 1, set the N-th order energy to be lower in a case where all of variables corresponding to the pixels included in the pixel group are 0 or all of the variables corresponding to the pixels included in the pixel group are 1 than in a case where all of the variables are not 0 and all of the variables are not 1.

4. The image processing apparatus according to claim 3,
wherein the processor is configured to, in separating the plurality of tubular structures using a graph cut process by selecting a pixel group including N (> 3) pixels having a shortest weighted path based on the likelihood that the same label is assigned and minimizing an N-th order energy with labels of the pixels included in the pixel group as variables, the variables being represented by 0 or 1, set the N-th order energy to be lower in a case where all of variables corresponding to the pixels included in the pixel group are 0 or all of the variables corresponding to the pixels included in the pixel group are 1 than in a case where all of the variables are not 0 and all of the variables are not 1.

5. The image processing apparatus according to claim 1 or 2,
wherein the processor is configured to:
derive a running vector at a plurality of center pixels along a center of the plurality of tubular structures;
derive a shortest path tree from an origin of a class representing each of the plurality of tubular structures such that an angle formed by an edge connecting the plurality of center pixels and the running vector is minimized; and
separate the plurality of tubular structures by cutting the shortest path tree such that the plurality of center pixels are in the same class as an origin having a closer path and a higher likelihood that the same label is assigned.

6. The image processing apparatus according to claim 1 or 2,
wherein the processor is configured to separate pixels other than pixels along the running vectors into tubular structures different from each other.

7. The image processing apparatus according to claim 6,
wherein the processor is configured to separate the plurality of tubular structures such that a boundary of the plurality of tubular structures is derived between pixels other than pixels where the running vectors intersect each other.

8. The image processing apparatus according to claim 7,
wherein the processor is configured to separate the plurality of tubular structures using a trained model in which machine learning is performed so as to minimize a loss in a direction in which the running vectors are continuous, based on the medical image and the running vectors.

9. The image processing apparatus according to any one of claims 1 to 8,
wherein the plurality of tubular structures include at least two of an artery, a vein, a portal vein, a ureter, or a nerve.

10. An image processing method comprising:
deriving, at each pixel of a plurality of tubular structures, running vectors being unit vectors representing directions running from the pixel in which a tubular structure is present based on a medical image including the plurality of tubular structures; and
separating the plurality of tubular structures along the running vectors,
the method **characterised by** comprising, based on an angle formed by a direction vector from a first pixel to a second pixel and the running vector at at least one of the first pixel or the second pixel, determining the likelihood that the same label is assigned to the first pixel and the second pixel to separate the plurality of tubular structures, wherein the smaller the angle the higher the likelihood that the same label is assigned to the first and second pixels

11. A computer-readable storage medium that stores an image processing program comprising instructions that, when executed by a computer, cause the computer to perform:
a step of deriving, at each pixel of a plurality of tubular structures, running vectors being unit vectors representing directions running from the pixel in which a tubular structure is present based on a medical image including the plurality of tubular structures; and
a step of separating the plurality of tubular structures along the running vectors; and
**characterised by**
a step of determining, based on an angle formed by a direction vector from a first pixel to a second pixel and the running vector at at least one of the first pixel or the second pixel, the likelihood that the same label is assigned to the first pixel and the second pixel to separate the plurality of tubular structures, wherein the smaller the angle the higher the likelihood that the same label is assigned to the first and second pixels.

## Patentansprüche

1. Bildverarbeitungsvorrichtung, die mindestens einen Prozessor (11) umfasst,
wobei der Prozessor so konfiguriert ist, dass er:
an jedem Pixel von mehreren rohrförmigen Strukturen Laufvektoren, die Einheitsvektoren sind, die Richtungen, die von dem Pixel, in dem eine rohrförmige Struktur vorhanden ist, laufen, darstellen, auf der Grundlage eines medizinischen Bildes, das die mehreren rohrförmigen Strukturen enthält, ableitet; und
die mehreren rohrförmigen Strukturen entlang der Laufvektoren trennt;
**dadurch gekennzeichnet, dass**
der Prozessor so konfiguriert ist, dass er, auf der Grundlage eines Winkels, der durch einen Richtungsvektor von einem ersten Pixel zu einem zweiten Pixel und den Laufvektor an mindestens einem von dem ersten Pixel und dem zweiten Pixel gebildet wird, die Wahrscheinlichkeit, dass das gleiche Etikett dem ersten Pixel und dem zweiten Pixel zugewiesen wird, um die mehreren rohrförmigen Strukturen zu trennen, bestimmt, wobei je kleiner der Winkel ist, die Wahrscheinlichkeit umso größer ist, dass das gleiche Etikett den ersten und zweiten Pixeln zugewiesen wird.

2. Bildverarbeitungsvorrichtung nach Anspruch 1,
wobei der Prozessor so konfiguriert ist, dass er den Laufvektor unter Verwendung eines trainierten Modells zum Ableiten des Laufvektors an jedem Pixel der mehreren rohrförmigen Strukturen aus dem medizinischen Bild ableitet.

3. Bildverarbeitungsvorrichtung nach Anspruch 1 oder 2,
wobei der Prozessor so konfiguriert ist, dass er bei Trennen der mehreren rohrförmigen Strukturen unter Verwendung eines Graphenschnittprozesses durch Auswählen einer Pixelgruppe, die N (> 3) Pixel, für die die Laufvektoren in der gleichen Richtung sind oder sich kontinuierlich ändern, und die zueinander benachbart sind, enthält, und Minimieren einer Energie N-ter Ordnung mit Etiketten der in der Pixelgruppe enthaltenen Pixel als Variablen, wobei die Variablen, die durch 0 oder 1 dargestellt werden, die Energie N-ter Ordnung so einstellt, dass sie in einem Fall, in dem alle Variablen, die den in der Pixelgruppe enthaltenen Pixeln entsprechen, 0 sind oder alle Variablen, die den in der Pixelgruppe enthaltenen Pixeln entsprechen, 1 sind, niedriger als in einem Fall, in dem nicht alle Variablen 0 sind und nicht alle Variablen 1 sind, ist.

4. Bildverarbeitungsvorrichtung nach Anspruch 3,
wobei der Prozessor so konfiguriert ist, dass er bei Trennen der mehreren rohrförmigen Strukturen unter Verwendung eines Graphenschnittprozesses durch Auswählen einer Pixelgruppe, die N (> 3) Pixel mit einem kürzesten gewichteten Weg enthält, auf der Grundlage der Wahrscheinlichkeit, dass das gleiche Etikett zugewiesen wird, und Minimieren einer Energie N-ter Ordnung mit Etiketten der in der Pixelgruppe enthaltenen Pixel als Variablen, wobei die Variablen, die durch 0 oder 1 dargestellt werden, die Energie N-ter Ordnung so einstellt, dass sie in einem Fall, in dem alle Variablen, die den in der Pixelgruppe enthaltenen Pixeln entsprechen, 0 sind oder alle Variablen, die den in der Pixelgruppe enthaltenen Pixeln entsprechen, 1 sind, niedriger als in einem Fall, in dem nicht alle Variablen 0 sind und nicht alle Variablen 1 sind, ist.

5. Bildverarbeitungsvorrichtung nach Anspruch 1 oder 2,
wobei der Prozessor so konfiguriert ist, dass er:
einen Laufvektor an mehreren Mittelpixeln entlang einer Mitte der mehreren rohrförmigen Strukturen ableitet;
einen kürzesten Pfadbaum aus einem Ursprung einer Klasse, die jede der mehreren rohrförmigen Strukturen darstellt, so ableitet, dass ein Winkel, der durch eine Kante,
die die mehreren Mittelpixel verbindet, und den Laufvektor gebildet wird, minimiert wird; und
die mehreren rohrförmigen Strukturen durch Schneiden des kürzesten Pfadbaums so trennt, dass die mehreren Mittelpixel in derselben Klasse wie ein Ursprung mit einem näheren Pfad und einer höheren Wahrscheinlichkeit, dass das gleiche Etikett zugewiesen wird, sind.

6. Bildverarbeitungsvorrichtung nach Anspruch 1 oder 2,
wobei der Prozessor so konfiguriert ist, dass er Pixel, die nicht Pixel entlang der Laufvektoren sind, in rohrförmige Strukturen, die voneinander verschieden sind, trennt.

7. Bildverarbeitungsvorrichtung nach Anspruch 6,
wobei der Prozessor so konfiguriert ist, dass er die mehreren rohrförmigen Strukturen so trennt, dass eine Grenze der mehreren rohrförmigen Strukturen zwischen anderen Pixeln als Pixeln, an denen die Laufvektoren einander schneiden, abgeleitet wird.

8. Bildverarbeitungsvorrichtung nach Anspruch 7,
wobei der Prozessor so konfiguriert ist, dass er die mehreren rohrförmigen Strukturen unter Verwendung eines trainierten Modells, bei dem maschinelles Lernen so durchgeführt wird, dass ein Verlust in einer Richtung in der die Laufvektoren kontinuierlich sind, zu minimieren, auf der Grundlage des medizinischen Bildes und der Laufvektoren trennt.

9. Bildverarbeitungsvorrichtung nach einem der Ansprüche 1 bis 8,
wobei die mehreren rohrförmigen Strukturen mindestens zwei von einer Arterie, einer Vene, einer Pfortader, einem Harnleiter und einem Nerv enthalten.

10. Bildverarbeitungsverfahren, umfassend:
Ableiten, an jedem Pixel von mehreren rohrförmigen Strukturen, von Laufvektoren, die Einheitsvektoren sind, die Richtungen, die von dem Pixel, in dem eine rohrförmigen Struktur vorhanden ist, laufen, darstellen, auf der Grundlage eines medizinischen Bildes, das die mehreren rohrförmigen Strukturen enthält; und
Trennen der mehreren rohrförmigen Strukturen entlang der Laufvektoren,
wobei das Verfahren **gekennzeichnet ist: durch**
Umfassen, auf der Grundlage eines Winkels, der **durch** einen Richtungsvektor von einem ersten Pixel zu einem zweiten Pixel und den Laufvektor an mindestens einem von dem ersten Pixel und dem zweiten Pixel gebildet wird, Bestimmen der Wahrscheinlichkeit, dass das gleiche Etikett dem ersten Pixel und dem zweiten Pixel zugewiesen wird, um die mehreren rohrförmigen Strukturen zu trennen, wobei je kleiner der Winkel ist, die Wahrscheinlichkeit umso größer ist, dass das gleiche Etikett den ersten und zweiten Pixeln zugewiesen wird.

11. Computerlesbares Speichermedium, das ein Bildverarbeitungsprogramm speichert, das Anweisungen umfasst, die, wenn sie von einem Computer ausgeführt werden, den Computer veranlassen, durchzuführen:
einen Schritt des Ableitens, an jedem Pixel von mehreren rohrförmigen Strukturen, von Laufvektoren, die Einheitsvektoren sind, die Richtungen, die von dem Pixel, in dem eine rohrförmige Struktur vorhanden ist, laufen, darstellen, auf der Grundlage eines medizinischen Bildes, das die mehreren rohrförmigen Strukturen enthält; und
einen Schritt des Trennens der mehreren rohrförmigen Strukturen entlang der Laufvektoren; und
**gekennzeichnet durch**
einen Schritt des Bestimmens, auf der Grundlage eines Winkels, der **durch** einen Richtungsvektor von einem ersten Pixel zu einem zweiten Pixel und den Laufvektor an mindestens einem von dem ersten Pixel und dem zweiten Pixel gebildet wird, der Wahrscheinlichkeit, dass das gleiche Etikett dem ersten Pixel und dem zweiten Pixel zugewiesen wird, um die mehreren rohrförmigen Strukturen zu trennen, wobei je kleiner der Winkel ist, die Wahrscheinlichkeit umso größer ist, dass das gleiche Etikett den ersten und zweiten Pixeln zugewiesen wird.

## Revendications

1. Appareil de traitement d'images comprenant au moins un processeur (11),
dans lequel le processeur est configuré pour :
dériver, à chaque pixel d'une pluralité de structures tubulaires, des vecteurs courants étant des vecteurs unitaires représentant des directions partant du pixel dans lequel une structure tubulaire est présente, sur la base d'une image médicale incluant la pluralité de structures tubulaires ; et
séparer la pluralité de structures tubulaires le long des vecteurs courants ;
**caractérisé en ce que**
le processeur est configuré pour, sur la base d'un angle formé par un vecteur de direction d'un premier pixel à un deuxième pixel et le vecteur courant à au moins l'un du premier pixel ou du deuxième pixel, déterminer la probabilité que la même étiquette soit attribuée au premier pixel et au deuxième pixel pour séparer la pluralité de structures tubulaires, dans lequel plus l'angle est petit, plus la probabilité que la même étiquette soit attribuée aux premier et deuxième pixels est élevée.

2. Appareil de traitement d'images selon la revendication 1,
dans lequel le processeur est configuré pour dériver le vecteur courant en utilisant un modèle entraîné pour dériver le vecteur courant à chaque pixel de la pluralité de structures tubulaires à partir de l'image médicale.

3. Appareil de traitement d'images selon la revendication 1 ou la revendication 2, dans lequel le processeur est configuré pour, lors de la séparation de la pluralité de structures tubulaires à l'aide d'un processus de coupe de graphe en sélectionnant un groupe de pixels incluant N (> 3) pixels pour lesquels les vecteurs courants sont dans la même direction ou changent continuellement et qui sont adjacents les uns aux autres et en minimisant une énergie de N-ième ordre avec des étiquettes des pixels inclus dans le groupe de pixels comme variables, les variables étant représentées par 0 ou 1, définir l'énergie de N-ième ordre pour être plus faible dans un cas où toutes les variables correspondant aux pixels inclus dans le groupe de pixels sont 0 ou toutes les variables correspondant aux pixels inclus dans le groupe de pixels sont 1 que dans un cas où toutes les variables ne sont pas 0 et toutes les variables ne sont pas 1.

4. Appareil de traitement d'images selon la revendication 3,
dans lequel le processeur est configuré pour, lors de la séparation de la pluralité de structures tubulaires à l'aide d'un processus de coupe de graphe en sélectionnant un groupe de pixels incluant N (> 3) pixels ayant un chemin pondéré le plus court sur la base de la probabilité que la même étiquette soit attribuée et en minimisant une énergie de N-ième ordre avec des étiquettes des pixels inclus dans le groupe de pixels comme variables, les variables étant représentées par 0 ou 1, définir l'énergie de N-ième ordre pour être plus faible dans un cas où toutes les variables correspondant aux pixels inclus dans le groupe de pixels sont 0 ou toutes les variables correspondant aux pixels inclus dans le groupe de pixels sont 1 que dans un cas où toutes les variables ne sont pas 0 et toutes les variables ne sont pas 1.

5. Appareil de traitement d'images selon la revendication 1 ou la revendication 2,
dans lequel le processeur est configuré pour :
dériver un vecteur courant à une pluralité de pixels centraux le long d'un centre de la pluralité de structures tubulaires ;
dériver un arbre de chemin le plus court à partir d'une origine d'une classe représentant chacune de la pluralité de structures tubulaires de sorte qu'un angle formé par une arête reliant la pluralité de pixels centraux et le vecteur courant soit minimisé ; et
séparer la pluralité de structures tubulaires en coupant l'arbre de chemin le plus court de sorte que la pluralité de pixels centraux soient dans la même classe qu'une origine ayant un chemin plus proche et une probabilité plus élevée que la même étiquette soit attribuée.

6. Appareil de traitement d'images selon la revendication 1 ou la revendication 2,
dans lequel le processeur est configuré pour séparer des pixels autres que des pixels le long des vecteurs courants en structures tubulaires différentes les unes des autres.

7. Appareil de traitement d'images selon la revendication 6,
dans lequel le processeur est configuré pour séparer la pluralité de structures tubulaires de sorte qu'une limite de la pluralité de structures tubulaires soit dérivée entre des pixels autres que des pixels où les vecteurs courants se croisent.

8. Appareil de traitement d'images selon la revendication 7,
dans lequel le processeur est configuré pour séparer la pluralité de structures tubulaires en utilisant un modèle entraîné dans lequel un apprentissage automatique est effectué de manière à minimiser une perte dans une direction dans laquelle les vecteurs courants sont continus, sur la base de l'image médicale et des vecteurs courants.

9. Appareil de traitement d'images selon l'une quelconque des revendications 1 à 8, dans lequel la pluralité de structures tubulaires inclut au moins deux d'une artère, d'une veine, d'une veine porte, d'un uretère ou d'un nerf.

10. Procédé de traitement d'images comprenant :
dériver, à chaque pixel d'une pluralité de structures tubulaires, des vecteurs courants étant des vecteurs unitaires représentant des directions partant du pixel dans lequel une structure tubulaire est présente, sur la base d'une image médicale incluant la pluralité de structures tubulaires ; et
séparer la pluralité de structures tubulaires le long des vecteurs courants,
le procédé **caractérisé par**
comprenant, sur la base d'un angle formé par un vecteur de direction d'un premier pixel à un deuxième pixel et le vecteur courant à au moins l'un du premier pixel ou du deuxième pixel, déterminer la probabilité que la même étiquette soit attribuée au premier pixel et au deuxième pixel pour séparer la pluralité de structures tubulaires, dans lequel plus l'angle est petit, plus la probabilité que la même étiquette soit attribuée aux premier et deuxième pixels est élevée.

11. Support de stockage lisible par ordinateur qui stocke un programme de traitement d'images comprenant des instructions qui, lorsqu'elles sont exécutées par un ordinateur, amènent l'ordinateur à effectuer :
une étape de dérivation, à chaque pixel d'une pluralité de structures tubulaires, des vecteurs courants étant des vecteurs unitaires représentant des directions partant du pixel dans lequel une structure tubulaire est présente, sur la base d'une image médicale incluant la pluralité de structures tubulaires ; et
une étape de séparation de la pluralité de structures tubulaires le long des vecteurs courants ; et
**caractérisé par**
une étape de détermination, sur la base d'un angle formé par un vecteur de direction d'un premier pixel à un deuxième pixel et le vecteur courant à au moins l'un du premier pixel ou du deuxième pixel, de la probabilité que la même étiquette soit attribuée au premier pixel et au deuxième pixel pour séparer la pluralité de structures tubulaires, dans lequel plus l'angle est petit, plus la probabilité que la même étiquette soit attribuée aux premier et deuxième pixels est élevée.
